# EUROPÄISCHE PATENTSCHRIFT

(11) **EP 2 389 675 B1**
(45) Veröffentlichungstag und Bekanntmachung des Hinweises auf die Patenterteilung: **16.01.2013**
(21) Anmeldenummer: 10700571.2
(22) Anmeldetag: 20.01.2010
(51) Int. Cl.: G21F 5/008, G21F 5/12

(54) **VERFAHREN UND ANORDNUNG ZUM GASDICHTEN UMSCHLIESSEN ZUMINDEST EINES BRENNSTABS**
METHOD AND ARRANGEMENT FOR GAS-TIGHTLY ENCLOSING AT LEAST ONE FUEL ROD
PROCÉDÉ ET DISPOSITIF PERMETTANT D'ENTOURER DE MANIÈRE ÉTANCHE AU GAZ AU MOINS UNE BARRE DE COMBUSTIBLE

(30) Priorität: 23.01.2009 DE 102009003385; 16.03.2009 DE 102009003621
(43) Veröffentlichungstag der Anmeldung: 30.11.2011
(73) Patentinhaber: Nuclear Cargo + Service GmbH, 63457 Hanau (DE)
(72) Erfinder: HILBERT, Franz, 65199 Wiesbaden (DE)
(74) Vertreter: Stoffregen, Hans-Herbert
(86) Internationale Anmeldenummer: PCT/EP2010/050613
(87) Internationale Veröffentlichungsnummer: WO 2010/084122

(56) Entgegenhaltungen:
- EP-A2- 1 600 982
- DE-A1- 3 226 986
- US-A1- 2007 104 305
- F. HILBERT: "The NCS 45 Cask Family" 10THINTERNATIONAL TOPICAL MEETING ON RESEARCH REACTOR FUEL MANAGEMENT, 30. April 2006 (2006-04-30), - 2. Mai 2006 (2006-05-02) Seiten 183-187, XP002577879

## Beschreibung

Die Erfindung bezieht sich auf ein Verfahren zum gasdichten Umschließen zumindest eines sich in einer Flüssigkeit befindlichen Brennstabs von einem Außenrohr, dessen stirnseitige Öffnungen von zweiten Verschlusselementen wie Kappen oder Stopfen nach Einbringen des zumindest einen Brennstabs verschlossen werden. Ferner nimmt die Erfindung Bezug auf eine Anordnung zum gasdichten Umschließen zumindest eines sich in einer Flüssigkeit befindenden Brennstabs.

Brennstäbe bestehen aus nuklearem Brennstoff wie beispielsweise angereichertem Uran oder Mischoxid bestehend aus Uran und Plutonium, der in dichtgeschweißten Hüllrohren bestehend z. B. aus einer Zirkonlegierung eingeschlossen ist. Bei Bestrahlung der Brennstäbe im Reaktor entstehen radioaktive Spaltprodukte sowie Aktiniden, die in den dichtgeschweißten Hüllrohren eingeschlossen bleiben.

Durch die Bestrahlung im Reaktor werden die Eigenschaften der Hüllrohre negativ beeinflusst. Bei geringen und mittleren Abbränden sind die Materialeigenschaften der Hüllrohre noch ausreichend, um das radioaktive Inventar bei den für Transport- und Lagerbedingungen anzunehmenden Beanspruchungen sicher einzuschließen. Über die Materialeigenschaften von Hüllrohren von Brennstäben mit hohen Abbränden von mehr als 60 - 70 GWd/MgSM liegen keine ausreichenden Untersuchungen zum Nachweis des sicheren Einschlusses des radioaktiven Inventars bei den für Transport- und Lagerbedingungen anzunehmenden Beanspruchungen vor. Aufgrund der im Nuklearbereich angewendeten konservativen Sicherheitsanalysen werden deshalb hochabgebrannte Brennstäbe wie beschädigte bestrahlte Brennstäbe behandelt.

Bei beschädigten bestrahlten und hochabgebrannten Brennstäben ist die Barriere "Hüllrohr" definitionsgemäß nicht vorhanden. Spaltprodukte, insbesondere gasförmige Spaltprodukte, und Aktiniden können aus dem Brennstab austreten. Beim Transport und der Lagerung der Brennstäbe in Transport- bzw. Lagerbehältern gelangen somit die radioaktiven Inventare der Brennstäbe in die Behälteratmosphäre und stehen an den Dichtungen dieser Behälter an. Bei Transportbehältern, die in der Regel mit Dichtungen aus Elastomeren ausgerüstet sind, ergeben sich hierdurch stark erhöhte Freisetzungsraten bzw. bei Einhaltung der in den relevanten Vorschriften festgelegten zulässigen Freisetzungsraten sehr geringe zulässige Brennstoffinventare im Behälter. Diese zulässigen Brennstoffinventare können in Abhängigkeit von der Abklingzeit so gering sein, dass ein kompletter Brennstab nicht mehr transportiert werden kann. Bei Lagerbehältern können die an den Dichtungen anstehenden radioaktiven Nuklide zu negativen Langzeitbeeinflussungen der Dichtungen führen. Derzeit sind deshalb als Beladung von Behältern, die zur Lagerung von Brennelementen dienen, nur intakte Brennstäbe mit limitierten Abbränden zugelassen.

Nach der Bestrahlung im Reaktor werden die Brennstäbe zur Kühlung und Abschirmung der radioaktiven Strahlung unter Wasser gelagert. In der Regel sind in Kernkraftwerken keine Einrichtungen vorhanden, die eine trockene Bearbeitung von bestrahlten Brennstäben ermöglichen. Das Einbringen von bestrahlten Brennstäben in Transport-und/oder Lagerbüchsen muss demnach zwingend unter Wasser erfolgen.

Es ist bekannt, beschädigte bestrahlte Brennstäbe in Heißen Zellen in trockenem Zustand in verschweißte Transport- und/oder Lagerbüchsen einzubringen.

Auch soll vorgeschlagen sein, bestrahlte Brennstäbe unter Wasser in verschraubte, metallisch dichtende Transport- und/oder Lagerbüchsen einzubringen. Dabei wird ein Großteil des Wassers durch von oben zugeführte Druckluft aus der Büchse verdrängt, um die Büchse anschließend durch beidseitig vorhandene verschraubte Stopfen zu verschließen. Bedingt durch das Verfahren verbleibt eine undefinierte Menge Restwasser in der Büchse. Dies kann durch Verdampfen zu Druckaufbau in der Büchse führen, da die Brennstäbe beim Transport bzw. der Lagerung eine Temperatur bis beispielsweise 370°C erreichen können. Des Weiteren kann undefinierte Korrosion an den Hüllrohren oder dem Brennstoff auftreten.

Der DE-A-28 54 358 ist ein Transportbehälter für radioaktive Materialien zu entnehmen. Um in deyn Behälter radioaktive Materialien in trockener Gasatmosphäre zu la-gern, wird der Behälter mit Gas durchspült und sodann verschlossen.

Nach der DE-U-89 06 938 werden Brennelemente in einem Brennelementbecken in eine Tauchglocke eingebracht, die nach dem Verschließen evakuiert wird.

Aus der US-A-5,633,904 ist ein Transfersystem für Brennstoffstäbe bekannt, das einen oberhalb eines Beckens angeordneten Transportbehälter umfasst, in das über ein Transfersystem die Brennstäbe aus dem Becken eingebracht werden.

Ein bis auf eine Beladeöffnung gasdicht verschlossener Behälter wird nach der DE-A-32 26 986 mit radioaktiven Bauteilen beladen, sodann wird über die Beladeöffnung unter Wasser eine mit Gas gefüllte Haube angeordnet, in deren auf der Unterseite befindliche Öffnung der Behälter mit der Beladeöffnung greift und mit der der Spiegel des diese Beladeöffnung umgebenden Wassers unter der Beladeöffnung verdrängt wird, anschließend wird unter der Haube eine Evakuiervorrichtung gasdicht an die Beladeöffnung des Behälters angekoppelt, mit der der Behälter innen vakuumgetrocknet wird, und nach diesem Vacuumtrocknen wird die Evakuiervorrichtung vor der Beladeöffnung abgekoppelt und diese Beladeöffnung unter der mit Gas gefüllten Haube mit einem Deckel gasdicht verschlossen.

Sowohl in der US-A-2007/0104305 als auch in der EP-A-1 600 982 werden Verfahren und Anordnung zur gasdichten Kapselung von Brennstäben beschrieben, wobei Wasser direkt aus den Kapseln abgesaugt wird.

Der vorliegenden Erfindung liegt die Aufgabe zu Grunde, ein Verfahren und eine Anordnung der eingangs genannten Art zur Verfügung zu stellen, das bzw. die es ermöglicht, hochabgebrannte und/oder beschädigte bestrahlte Brennstäbe in einer definierten trockenen Atmosphäre und nachgewiesener Dichtheit lager- bzw. transportfähig zu machen.

Erfindungsgemäß wird die Aufgabe im Wesentlichen durch ein Verfahren gelöst, das die nachstehenden Verfahrensschritte - nicht zwingend in der vorgegebenen Reihenfolge - einschließt und zwar:
a) Einbringen des Außenrohres in eine rohrförmige Aufnahme und Positionieren in der Aufnahme,
b) Verschließen einer der ersten offenen Stirnseiten der Aufnahme mit einem ersten Verschlusselement,
c) Einbringen des zumindest einen Brennstabes in das Außenrohr,
d) Verschließen der verbliebenen offenen Stirnseite der Aufnahme mit einem weiteren ersten Verschlusselement,
e) Absaugen von in der Aufnahme vorhandener Flüssigkeit bei auf die stimseitigen Öffnungen des Außenrohrs ausgerichteten und zu diesen beabstandeten zweiten Verschlusselementen,
f) Trocknen des Innenraums der Aufnahme,
g) stoffschlüssiges Verbinden der zweiten Verschlusselemente mit den stirnseitigen Öffnungen des Außenrohrs,
h) Fluten der Aufnahme und
i) Entnahme des den zumindest einen Brennstab umschließenden Außenrohrs aus der Aufnahme,
wobei zumindest die Verfahrensschritte c) bis i) in einer Flüssigkeit oder der Flüssigkeit durchgeführt werden, in der sich der Brennstab befindet.

Erfindungsgemäß werden hochabgebrannte und/oder beschädigte bestrahlte Brennstäbe in der Flüssigkeit, die - wie eine Wasserüberdeckung - zur Abschirmung der Strahlung ausreicht, in Außenrohre, vorzugsweise in Edelstahlrohre, eingebracht, die vor dem Verschließen getrocknet und mittels insbesondere durch Löten stoffschlüssig mit als Stopfen oder Kappe zu bezeichnenden zweiten Verschlusselementen verschlossen werden, wobei die Möglichkeit besteht, dass nach dem Verschließen eine Dichtheitsprüfung erfolgt.

Hierzu ist insbesondere vorgesehen, dass nach der Trocknung, insbesondere Vakuum-trocknung, der Innenraum der Aufnahme mit Edelgas wie Helium geflutet wird, unter Edelgasatmosphäre das stoffschlüssige Verbinden wie Löten durchgeführt wird und nach der Ausbildung der stoffschlüssigen Verbindung der Innenraum insbesondere mit trockenem Stickstoff gespült wird, so dass anschließend eine Dichtheitsprüfung des Außenrohrs wie Heliumdichtheitsprüfung durchgeführt werden kann.

Es werden folglich hochabgebrannte und/oder beschädigte bestrahlte Brennelemente durch Einschließung in einem metallischen Rohr, also das Außenrohr, das auch als Büchse zu bezeichnen ist, in einen transport- und/oder lagerfähigen Zustand gebracht.

Insbesondere ist vorgesehen, dass jeweils ein zweites Verschlusselement lösbar mit einem der ersten Verschlusselemente oder einem von diesem ausgehenden Fixierelement vor dem Einbringen in die Aufnahme verbunden wird und dass die Verbindung während des stoffschlüssigen Verbindens durch Wärmeeinwirkung zerstört wird.

Andere Möglichkeiten, um das zweite Verschlusselement auf die Büchse auszurichten und mit dieser zu verbinden, sind gleichfalls möglich. So kann das zweite Verschlusselement wie Stopfen oder Kappe einen abragenden Zapfen oder ein abragendes pilzförmiges Element aufweisen, das durch ein geeignetes Halteelement wie Greifer festgehalten wird. Dieses Halteelement kann z. B. mechanisch von außen über z. B. einen Wasser-Hydraulikzylinder, eine Steuerscheibe, einen Steuerring oder gleichwirkende Elemente oder auch durch Hitzeeinwirkung gelöst werden, um nach Positionieren des zweiten Verschlusselementes dieses von dem Halteelement zu lösen. Es besteht aber auch die Möglichkeit, das zweite Verschlusselement über ein bei Wärme sich zerstörendes bzw. schmelzendes Element wie Schraube mit einem ersten Verschlusselement oder einem von diesem ausgehenden Fixierelement zu verbinden. Dieses Befestigungselement wie Schraube kann aus Kunststoff wie Polyamid oder aus niedrig schmelzendem Metall wie Zinn, Silberlegierung bestehen, das durch Hitzeeinwirkung zerstört wird, also dann, wenn das stoffschlüssige Verbinden zwischen dem zweiten Verschlusselement und dem Mantel der Büchse erfolgt.

Insbesondere geht das zweite Verschlusselement von dem in axialer Richtung der Aufnahme verstellbaren Fixierelement aus. Hierzu kann vorgesehen sein, dass das Fixierelement von einer das erste Verschlusselement durchsetzenden Kolbenstange eines außerhalb der Aufnahme angeordneten Zylinders wie Wasser-Hydraulikzylinder ausgeht, wobei die Kolbenstange gegenüber dem Innenraum der Aufnahme insbesondere über einen Faltenbalg abgedichtet wird.

Das Fixieren des Außenrohrs innerhalb der Aufnahme wird mittels der Aufnahme, d. h. dessen Umfangswandung durchsetzende und gegenüber dem Innenraum abgedichteten Kolbenstangen durchgeführt, die ihrerseits von außerhalb der Aufnahme angeordneten Zylindern ausgehen.

Zum Absaugen der Flüssigkeit aus dem Innenraum bzw. zum Entlüften bzw. Durchspülen des Innenraums ist vorgesehen, dass der Innenraum mit von den ersten Verschlusselementen ausgehenden Anschlüssen verbunden wird.

In Weiterbildung der Erfindung ist vorgesehen, dass eine aus zumindest drei Rohrelementen bestehende Baueinheit als die Aufnahme verwendet wird, dass ein inneres Rohrelement von den Kolben zum Positionieren und Fixieren des Außenrohrs durchsetzt wird und dass äußere Rohrelemente die ersten Verschlusselemente bilden oder über diese verschlossen werden.

Insbesondere ist jedoch vorgesehen, dass die Aufnahme aus zumindest fünf Rohrelementen besteht, die neben den äußeren Rohrelementen, die die ersten Verschlusselemente bilden oder über diese verschlossen werden, zwei als Halteeinrichtungen dienende innere Rohrelemente sowie ein zwischen diesen angeordnetes Verbindungsrohrelement umfassen, dessen Länge derart ausgelegt wird, dass die Innenlängserstreckung der Aufnahme an die Länge des aufzunehmenden Brennstabs bzw. Außenrohrs angepasst ist.

Insbesondere ist vorgesehen, dass zunächst in die aus einem oder vorzugsweise drei Rohrelementen bestehende Einheit das Außenrohr eingebracht, positioniert und fixiert wird, in dem der Brennstab eingelagert wird. Anschließend wird ein äußeres Rohrelement mit dem als Halteeinrichtung dienenden Rohrelement verbunden. Das äußere Rohrelement ist mit einem ersten Verschlusselement verschlossen, das von einem Kolben durchsetzt ist, der vorzugsweise über ein Fixierelement ein zweites Verschlusselement lösbar hält.

Auf das freie Ende der aus dem ersten Verschlusselement und dem bzw. den Rohrelementen, die eine bzw. zwei Halteeinrichtungen umfassen, bestehenden Einheit wird sodann das weitere äußere Rohrelement aufgesetzt und mit dieser verbunden.

All diese Verfahrensschritte werden vorzugsweise außerhalb der Flüssigkeit durchgeführt, in der sich der bzw. die Brennstäbe befinden, der bzw. die in das Außenrohr eingebracht werden sollen.

Die zuvor beschriebene Aufnahme wird sodann in die Flüssigkeit eingebracht, um mit dem zumindest einen Brennstab beladen zu werden, um schließlich die Aufnahme, also das zweite äußere Rohrelement mit einem weiteren ersten Verschlusselement dichtend zu verschließen, das gleichfalls von einem Kolben durchsetzt ist, über den gleichfalls ein zweites Verschlusselement gehalten wird. Bei zu den stirnseitigen Öffnungen des Außenrohrs beabstandeten zweiten Verschlusselementen wird sodann die Flüssigkeit aus der Aufnahme abgezogen, der Innenraum getrocknet und anschließend mit einem Edelgas wie Helium geflutet, um das stoffschlüssige Verbinden zwischen den zweiten Verschlusselementen und dem Außenrohr, d.h. dessen Hülle durchzuführen. Hierzu werden zunächst die Kolben in Richtung des Außenrohrs verstellt, damit die zweiten Verschlusselemente wie Stopfen und Kappen ordnungsgemäß zu dem Außenrohr ausgerichtet sind. Sodann erfolgt über die von den äußeren Rohrelementen ausgehenden Heizeinrichtungen ein das stoffschlüssige Verbinden sicherstellendes Erwärmen. Hierdurch wird gleichzeitig das zweite Verschlusselement von dem Kolben bzw. dem von diesem ausgehenden Fixierelement gelöst.

Die Rohrelemente sollten stirnseitig Flansche aufweisen, über die die Rohrelemente untereinander und endseitig mit Deckelelementen als die ersten Verschlusselemente verbunden werden.

Eine Anordnung zum gasdichten Umschließen zumindest eines sich in einer Flüssigkeit befindlichen Brennstabs von einem Außenrohr, dessen stirnseitige Öffnungen von zweiten Verschlusselementen wie Kappen oder Stopfen stoffschlüssig verschlossen sind, zeichnet sich im Wesentlichen dadurch aus, dass die Anordnung umfasst
- eine rohrförmige Aufnahme mit einer Umfangswandung und offenen Stirnseiten,
- erste Verschlusselemente, die während eines stoffschlüssigen Verbindens des Außenrohrs mit den zweiten Verschlusselementen die Aufnahme abdichtend verschließen,
- eine Fixierelemente aufweisende Positioniereinrichtung zum Positionieren und Fixieren des Außenrohrs im Innenraum der Aufnahme,
- zwei im Abstand der stirnseitigen Öffnungen des Außenrohrs zueinander beabstandet angeordnete Heizeinrichtungen zum stoffschlüssigen Verbinden der zweiten Verschlusselemente mit dem Außenrohr und
- im Bereich der offenen Stirnseiten der Aufnahme entlang deren Längsachse verstellbare die zweiten Verschlusselemente lösbar aufnehmende Halteelemente,
wobei insbesondere die Fixierelemente und/oder die Halteelemente jeweils von einer Kolbenstange eines Zylinders ausgehen und die Kolbenstangen die Umfangswandung der Aufnahme bzw. die ersten Verschlusselemente durchsetzen und gegenüber dem Innenraum der Aufnahme abgedichtet sind.

Dabei werden die Kolbenstangen insbesondere über Faltenbälge abgedichtet.

Die die Fixierelemente haltenden Kolbenstangen sind radial verstellbar.

Bei der Heizeinrichtung sollte es sich insbesondere um eine Induktionsheizung handeln.

Die ersten Verschlusselemente sind vorzugsweise als scheibenförmige Deckel ausgebildet und mit von der Aufnahme ausgehenden Flanschen verbunden.

Des Weiteren sollten die ersten Verschlusselemente jeweils einen zum Innenraum der Aufnahme führenden Anschluss aufweisen, um aus dem Innenraum Wasser absaugen bzw. diesen entlüften bzw. durchspülen zu können.

Insbesondere ist vorgesehen, dass die Aufnahme aus zumindest drei, vorzugsweise fünf Rohrelementen besteht, wobei die äußeren Rohrelemente mit dem inneren Rohrelement bzw. den inneren Rohrelementen über Flansche verbunden sind. Des Weiteren sollte von zumindest einem inneren Rohrelement, vorzugsweise von zwei inneren Rohrelementen jeweils eine Positioniereinrichtung ausgehen. Sind zwei innere Rohrelemente vorhanden, die jeweils eine Positioniereinrichtung aufweisen, sollte zwischen den zwei inneren Rohrelementen ein weiteres Rohrelement als Verbindungsstück angeordnet sein.

Die äußeren Rohrelemente weisen die Heizeinrichtung auf und sind insbesondere gleich ausgebildet.

Dem Grunde nach besteht die Aufnahme aus zumindest einer das den zumindest einen Brennstab aufnehmenden als metallische Büchse zu bezeichnende Außenrohr positionierende und fixierende Halteeinheit und zwei äußeren Löteinheiten, wobei die Einheiten über Flansche verbunden werden und endseitig über Verschlussdeckel verschließbar sind.

Bevorzugterweise ist vorgesehen, dass die bzw. jede Halteeinheit als ein Rohr mit endseitigen Flanschen ausgebildet ist bzw. ein solches umfasst, an dem radial außen Wasser-Hydraulikzylinder angebracht werden, deren Kolbenstangen durch die Rohrwand geführt und gegen den Innenraum mit Faltenbälgen abgedichtet sind. Insbesondere sollten zwei bis drei Wasser-Hydraulikzylinder vorgesehen sein, um im erforderlichen Umfang das Rohr bzw. die metallische Büchse zu halten. Endseitig sind an die Kolbenstangen Formstücke angebracht, die an die Außengeometrie der zu beladenen Außenrohre angepasst sind. Bei radial nach innen ausgefahrenen Kolbenstangen ist die zu beladende Büchse fixiert, bei radial nach außen bewegten Kolbenstangen kann die Büchse in die Aufnahme geladen bzw. aus dieser entladen werden.

Die Löteinheit sollte gleichfalls aus einem Rohr mit endseitigen Flanschen bestehen, an dem in Umfangsrichtung eine Heizung wie Induktionsheizung angebracht ist. Am freien Ende, also an der in Bezug auf die Halteeinheit abgewandten Stirnseite, ist die Löteinheit über einen Deckel verschließbar, an dem mittig ein Wasser-Hydraulikzylinder angebracht ist. Über diesen wird eine Kolbenstange durch den Deckel geführt, der gegenüber dem Innenraum durch einen Faltenbalg abgedichtet ist. Am freien Ende der Kolbenstange kann eine tellerartige Halteeinrichtung angebracht sein, auf der eine Fixierscheibe z. B. durch Verschrauben montiert ist. Auf der Fixierscheibe wird vor der Beladung, also dem Einbringen in die Aufnahme, das die metallische Büchse verschließende zweite Verschlusselement insbesondere durch Kleben fixiert. Im Deckel befindet sich auch ein Anschluss zur Entwässerung, zum Evakuieren und zum Trocknen des Innenraums, zur Flutung mit Inertgas sowie zur Dichtheitsprüfung des Außenrohrs nach dessen Verschließen, also nach Herstellung der Transport- und Lagerbüchse.

Die Löteinheit kann auch mit optischen und/oder Temperatur-Kontrolleinrichtungen zur Kontrolle der spezifikationsgerechten Verlötung der zweiten Verschlusselemente, also der Stopfen bzw. der Verschlusskappen ausgestattet sein.

Die die Aufnahme bildenden Rohrelemente, also die Halteeinheit bzw. Halteeinheiten mit ggf. Verbindungsrohr sowie die Löteinheiten, sind über die Flansche miteinander verbunden und vorzugsweise über Elastomerdichtungen abgedichtet.

Das Außenrohr besteht aus einem Hüllrohr, das fußseitig mit einem Siebeinsatz zur Zurückhaltung von Kontaminationen versehen sein kann und weist fuß- und kopfseitig das Verschlusselement wie den Stopfen bzw. die Kappe auf, über die das Hüllrohr durch Löten verschlossen wird. In dem Hüllrohr, also dem Außenrohr oder der Büchse, können kopf- und/oder fußseitig Abstandshalter zum Längenausgleich für die zu beladenden Brennstäbe eingebracht sein.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Seitenansicht einer Transport- und/oder Lagerbüchse,
- Fig. 2: einen Schnitt entlang der Linie A-A in Fig. 1 und
- Fig. 3: eine Anordnung zur Aufnahme und zum Verschließen der Transport-und/oder Lagerbüchse gemäß Fig. 1 und 2.

Um beschädigte bestrahlte und hochabgebrannte Brennstäbe lagern bzw. transportieren zu können, ist sicherzustellen, dass ein Austritt von Brennstoffinventaren, also gasförmigen Spaltprodukten ausgeschlossen wird. Anderenfalls würden die an den Dichtungen der die Brennstäbe aufnehmenden Transport- und Lagerbehälter anstehenden radioaktiven Nukliden zu negativen Langzeitbeeinflussungen führen.

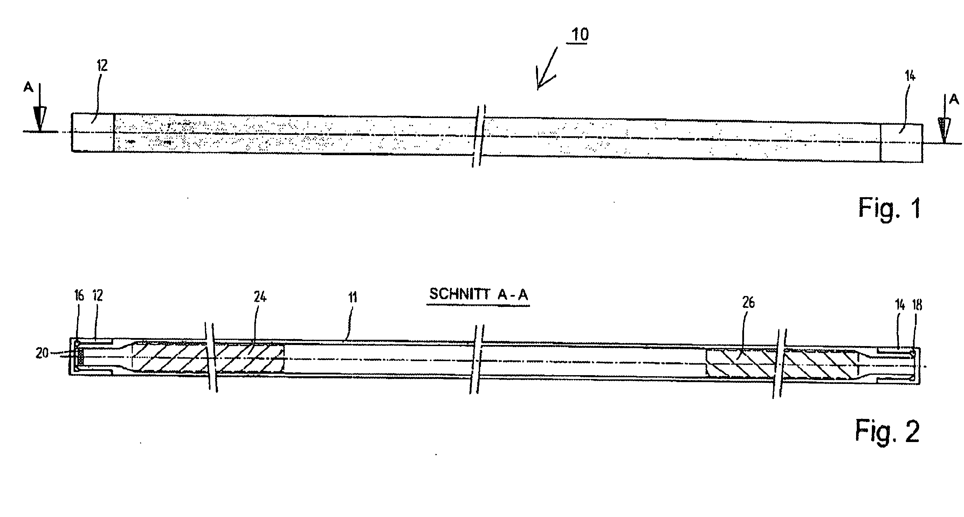

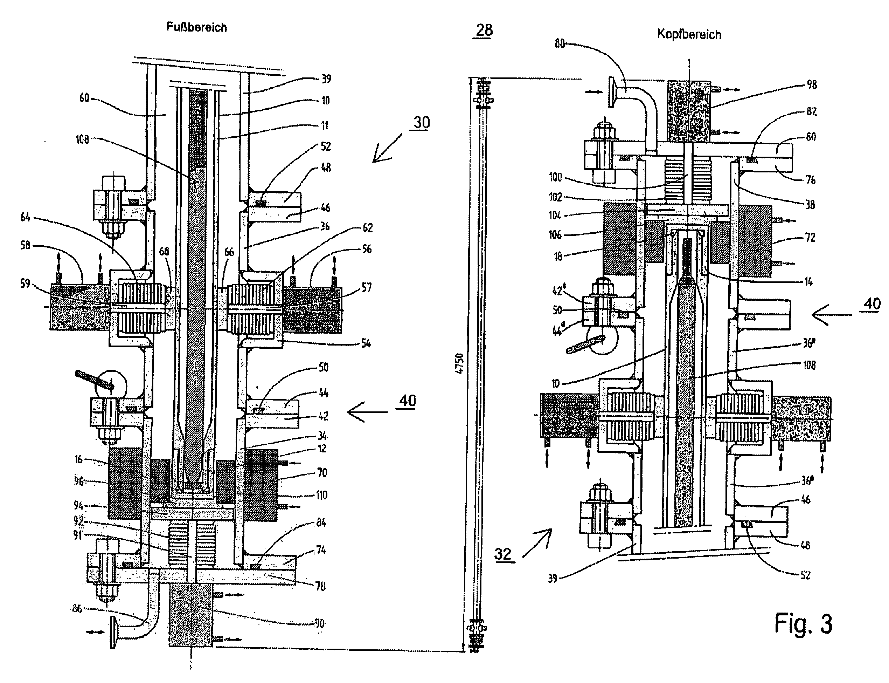

Bei hochabgebrannten oder beschädigten Brennstäben ist die Barriere "Hüllrohr" nicht mehr intakt, so dass diese als nicht vorhanden bewertet wird. Um dennoch entsprechende Brennstäbe lagern und transportieren zu können, werden diese nach der erfindungsgemäßen Lehre in ein als Transport- oder Lagerbüchse zu bezeichnendes metallisches Außenrohr 10 eingebracht, das nach Einbringen eines oder mehrerer Brennstäbe gasdicht über Stopfen oder Kappen 12, 14 (zweite Verschlusselemente) verschlossen wird. Die Büchse 10 ohne Stopfen oder Kappen 12, 14, also ohne zweite Verschlusselemente, ist ein Hüllrohr 11. Das gasdichte Verschließen des Hüllrohrs 11 erfolgt durch Löten. Hierzu wird in nachstehend beschriebener Weise vor Verschließen des Außenrohrs 10 ein Lot 16, 18 wie Lotpaste bzw. Lotformstück in die Innenumfangswand der Kappen 12, 14 eingebracht. Nach Aufsetzen der Kappen 12, 14 auf die Endabschnitte der Büchse, also des Außenrohrs 10, die entsprechend der Schnittdarstellung gemäß Fig. 2 eine geringere Wandstärke als das Hüllrohr 11 zwischen den Enden aufweisen, erfolgt ein stoffschlüssiges Verbinden, das im Zusammenhang mit der Fig. 3 näher beschrieben wird.

Des Weiteren kann das Hüllrohr 11 zumindest in einem Endbereich wie bodenseitig einen Siebeinsatz 20, 22 z. B. aus Sintermetall zur Zurückhaltung von Kontaminationen aufweisen. Schließlich können endseitig Abstandshalter 24, 26 in dem Außenrohr 10 bzw. dem Hüllrohr 11 angeordnet sein, um einen Ausgleich an die Länge des in die Büchse 10 einzubringenden Brennstabs zu ermöglichen.

In der Fig. 3 ist eine Anordnung 28 prinzipiell dargestellt, die zeichnerisch in zwei Teile aufgeteilt ist, wobei der linke Teil in der Fig. 3 den Fußbereich 30 und der rechte Teil den Kopfbereich 32 umfasst.

Die Anordnung 28 weist im Ausführungsbeispiel als Hauptbestandteile fünf Rohrelemente 34, 36, 39, 36', 38 auf, die eine Aufnahme 40 bilden. Die Rohrelemente 36, 36' dienen als Halteeinheiten, die äußeren Rohrelemente 34, 38 als Löteinheiten und das zwischen den Halteeinheiten 36, 36' angeordnete Rohrelement 39 als Verbindungsstück.

Die Rohrelemente 34, 36, 39, 36', 38 sind über Flansche 42, 44 bzw. 46, 48 bzw. 44', 42' verbunden, wobei zur Abdichtung zwischen diesen Elastomer-Dichtungen 50, 52 vorgesehen sind.

Die äußeren Rohrelemente 34, 38, die Löteinheiten bilden bzw. umfassen, können genauso wie die Rohrelemente 36, 36', die die Halteeinheiten bilden, spiegelbildlich identisch ausgebildet sein.

Da die Halteeinheiten grundsätzlich identisch ausgebildet sind, werden für deren Bestandteile gleiche Bezugszeichen verwendet.

Jede Halteeinheit, also jedes Rohrelement 36, 36', weist im Vergleich zu den angrenzenden Rohrelementen 34, 39 bzw. 39, 38 einen im Querschnitt bzw. Durchmesser vergrößerten Abschnitt 54 auf, an dem außenseitig Wasser-Hydraulikzylinder 56, 58 befestigt wie angeflanscht sind, deren Kolben 57, 59 sich durch die Wandung des vergrößerten Abschnitts 54 in den Innenraum 60 der Aufnahme 40 erstrecken. Die Kolben 57, 59 sind über Faltenbälge 62, 64 gegenüber dem Innenraum 60 abgedichtet und weisen außenseitig Formstücke 66, 68 auf, um ein den Fig. 1 und 2 entsprechendes Außenrohr 10 bzw. dessen Hüllrohr 11 zu positionieren und zu fixieren.

Die die Endstücke der Aufnahme 40 bildenden äußeren Rohrelemente 34, 38 weisen in Umfangsrichtung eine Heizung wie Induktionsheizung 70, 72 auf. Dabei ist der Abstand der Induktionsheizungen 70, 72 auf die Länge des in der Aufnahme 40 positionierten Hüllrohrs 11 der metallischen Büchse 10 (Außenrohr 10) ausgerichtet, um im Bereich der Enden erforderliche Wärme zum stoffschlüssigen Verbinden der Kappen 12, 14 mit dem Hüllrohr 11 applizieren zu können.

Die äußeren Rohrelemente 34, 38 weisen endseitig Flansche 74, 76 auf, um mit Deckelelementen 78, 80 (erste Verschlusselemente) verschlossen zu werden. Zwischen dem Flansch 74, 76 und dem Deckelelement 78, 80, also dem ersten Verschlusselement, kann jeweils eine Elastomer-Dichtung 82, 84 vorgesehen sein.

Jeder Deckel, also jedes Deckelelement 78, 80 ist über eine Öffnung mit einem Anschluss 86, 88 verbunden.

Des Weiteren ist an jedem Deckelelement 78, 80 außenseitig ein entlang der Mittelachse der Aufnahme 40 sich erstreckender Wasser-Hydraulikzylinder 90, 98 angeordnet, dessen Kolbenstange 91, 100 gegenüber dem Innenraum 60 über einen Faltenbalg 92, 102 abgedichtet ist. Die Kolbenstange 91, 100 weist endseitig einen Teller 94, 104 auf, der gegenüber dem Faltenbalg 92, 102 abgedichtet ist. An dem Teller 94, 104 ist im Ausführungsbeispiel eine Fixierscheibe 96, 106 montiert. An diese ist die Kappe 12, 14 durch z. B. Kleben fixiert. Zuvor ist die Kappe 12, 14 erwähntermaßen innenseitig mit einem Lotmaterial 16, 18 versehen worden.

Zum Laden eines insbesondere beschädigten Brennstabs 108 in die Lager- bzw. Transportbüchse (Außenrohr 10) bzw. dessen Hüllrohr 11 und anschließenden gasdichten Verschließen des Hüllrohrs 11 mit den Kappen 12, 14 werden nachstehende Verfahrensschritte durchgeführt.

Zunächst wird das Hüllrohr 11 in den Rohrteilen 36, 39, 36' über die Halteeinheiten positioniert bzw. fixiert, die den Wasserhydraulikzylinder 56, 58 mit den Kolben 57, 59 und den Formstücken 66, 68 umfassen. Letztere nehmen bereichsweise formschlüssig das Hüllrohr 11 auf. Sodann wird das untere äußere Rohrteil 34 über die Flansche 42, 44 mit dem inneren oder mittleren Rohrteil 36 verbunden, das die Halteeinheit bildet bzw. umfasst. Das äußere Rohrteil 34 ist über den ein erstes Verschlusselement bildenden Deckel 78 über den Flansch 74 verbunden. Dabei ist der Kolben 91 des Wasserhydraulikzylinders 90 in einem Umfang zurückgezogen, dass die mit der von der Fixierscheibe 96 durch Kleben verbundene Kappe 16 beabstandet zur stirnseitigen Öffnung 110 des Hüllrohrs 11 verläuft.

Anschließend wird das kopfseitige Rohrelement 38 mit der Halteeinheit, also mit dem Rohrelement 36' über die Flansche 42', 44' verbunden, ohne dass ersteres verschlossen ist.

Die bisher erfolgten Verfahrensschritte können außerhalb der Flüssigkeit durchgeführt werden, in der sich die einzubringenden Brennstäbe befinden. Sodann wird die Anordnung 28, ohne dass diese durch den kopfseitigen Deckel 80 verschlossen ist, in die Flüssigkeit, also z. B. in ein Brennelementebecken in einer gewünschten Halteposition angeordnet. Das Hüllrohr 11 wird mit dem Brennstab 108 beladen.

Selbstverständlich besteht auch die Möglichkeit, bei entsprechender Dimensionierung in ein Hüllrohr 11 mehrere Brennstäbe einzubringen.

Anschließend wird die obere Löteinheit, also das Rohrelement 38 mit dem Deckel 80 verschlossen. Dabei ist gleichfalls der Kolben 100 zurückgezogen, damit ein Spalt zwischen dem Hüllrohr 11 und der Kappe 14 besteht. Sodann wird über zumindest einen der Anschlüsse 86, 88 die Flüssigkeit aus dem Innenraum 60 abgezogen und über die Anschlüsse 86, 88 anschließend der Innenraum 60 getrocknet. Bevorzugterweise findet eine Vakuum-Trocknung statt. Anschließend wird der Innenraum 60 mit Helium geflutet. Die Kolben 91, 100 werden ausgefahren, so dass die Kappen 12, 14 auf das Hüllrohr 11 ordnungsgemäß positioniert werden. Die Induktionsheizungen 70, 72 werden aktiviert, so dass die gewünschte stoffschlüssige Verbindung zwischen den Kappen 12, 14 und den Enden des Hüllrohrs 11 erfolgt. Gleichzeitig wird die Verbindung zwischen den Kappen 12, 14 und den Fixierscheiben 96, 106 aufgrund der auftretenden Wärme zerstört. Ist die stoffschlüssige Verbindung zwischen den Kappen 12, 14 und dem Hüllrohr 11 erfolgt, wird das Helium aus dem Innenraum 60 z. B. durch Spülen mit vorzugsweise trockenem Stickstoff entfernt. Sodann kann eine Helium-Dichtheitsprüfung in der Transport und/oder Lagerbüchse, also dem Außenrohr 10, mittels Einstellen eines Vakuums in dem Innenraum 60 erfolgen. Gegebenenfalls kann außerdem oder alternativ mit optischen und/oder Temperatur-Kontrolleinrichtungen ein spezifikationsgerechtes Verlöten der Kappen 12, 14 überprüft werden. Anschließend wird der Innenraum 60 geflutet und die Lagerbüchse, also das Außenrohr 10, aus der Aufnahme 40 entfernt, in eine Lagerposition eingestellt oder in einen Transport- und/oder Lagerbehälter eingebracht.

Ist sowohl in der allgemeinen Beschreibung als auch bei der Erläuterung des Ausführungsbeispiels vorrangig von Wasser-Hydraulikzylindern die Rede, über die mittelbar oder unmittelbar die Büchse in der Aufnahme fixiert wird bzw. die zweiten Verschlusselemente bzw. die diese aufnehmende Fixierelemente verstellt werden, so sind andere eine gleiche Wirkung ausübende Elemente gleichfalls verwendbar. Insoweit ist die Angabe Wasser-Hydraulikzylinder als Synonym zu verstehen. Andere mechanische Verfahren können z. B. Gewindespindeln, Kurvenscheiben, Kurvenzylinder oder Federn umfassen, um eine gleiche technische Funktion auszuüben. Aber auch elektromagnetische Verfahren, z. B. über Stellmotoren mit Spindeln oder über Magnete und Federn sind als äquivalent anzusehen und somit von der Erfindung erfasst.

## Patentansprüche

1. Verfahren zum gasdichten Umschließen zumindest eines sich in einer Flüssigkeit befindlichen Brennstabs (108) von einem Außenrohr (10), dessen stirnseitige Öffnungen von zweiten Verschlusselementen wie Kappen oder Stopfen (12, 14) nach Einbringen des zumindest einen Brennstabs verschlossen werden, **gekennzeichnet durch die Verfahrensschritte**
a) Einbringen des Außenrohres (10) in eine rohrförmige Aufnahme und Positionieren in der Aufnahme (40),
b) Verschließen einer der ersten offenen Stirnseiten der Aufnahme mit einem ersten Verschlusselement (78),
c) Einbringen des zumindest einen Brennstabs (108) in das Außenrohr,
d) Verschließen der verbliebenen offenen Stirnseite der Aufnahme mit einem weiteren ersten Verschlusselement (80),
e) Absaugen von der in der Aufnahme vorhandener Flüssigkeit bei auf die stirnseitigen Öffnungen des Außenrohrs ausgerichteten und zu diesen beabstandeten zweiten Verschlusselementen,
f) Trocknen des Innenraums (60) der Aufnahme,
g) stoffschlüssiges Verbinden der zweiten Verschlusselemente mit den stirnseitigen Öffnungen des Außenrohrs,
h) Fluten der Aufnahme und
i) Entnahme des den zumindest einen Brennstab umschließenden Außenrohrs aus der Aufnahme,
wobei zumindest die Verfahrensschritte c) bis i) in einer Flüssigkeit oder der Flüssigkeit durchgeführt werden, in der sich der Brennstab befindet.

2. Verfahren nach Anspruch 1,
**dadurch gekennzeichnet,**
**dass** ein jeweiliges zweites Verschlusselement lösbar mit einem der ersten Verschlusselemente (78, 80) oder einem von diesem ausgehenden Fixierelement vor Einbringen in die Aufnahme vorzugsweise mittels eines Klebers mit dem in axialer Richtung der Aufnahme verstellbaren Fixierelement verbunden wird und dass die Verbindung während des stoffschlüssigen Verbindens zwischen dem zweiten Verschlusselement und dem Außenrohr (10) gelöst, insbesondere durch Wärmeeinwirkung zerstört wird.

3. Verfahren nach einem der vorhergehenden Ansprüche,
**dadurch gekennzeichnet,**
**dass** das zweite Verschlusselement mittels eines mechanischen Halteelementes fixiert wird, wobei insbesondere das zweite Verschlusselement mittelbar oder unmittelbar mit einem mit dem ersten Verschlusselement verbundenes Verbindungselement wie Schraube verbunden ist, das durch Hitzeeinwirkung zerstört wird.

4. Verfahren nach einem der vorhergehenden Ansprüche,
**dadurch gekennzeichnet,**
**dass** das Außenrohr (10) über die Aufnahme (40) durchsetzende und gegen deren Innenraum (60) abgedichtete Kolbenstangen (57, 59) von außerhalb der Aufnahme angeordneten Zylindern (56, 58) in der Aufnahme positioniert und fixiert wird.

5. Verfahren nach einem der vorhergehenden Ansprüche,
**dadurch gekennzeichnet,**
**dass** das zweite Verschlusselement mit stirnseitigem Öffnungsbereich des Außenrohrs (10) durch Löten oder mittels über Induktionsheizungen abgestrahlter Wärme stoffschlüssig verbunden wird, wobei insbesondere die zweiten Verschlusselemente mit dem Außenrohr (10) unter Edelgasatmosphäre stoffschlüssig verbunden werden.

6. Verfahren nach einem der vorhergehenden Ansprüche,
**dadurch gekennzeichnet,**
**dass** über die ersten Verschlusselemente (78, 80) Flüssigkeit aus der Aufnahme (40) abgezogen und/oder die Aufnahme entlüftet wird, wobei bevorzugterweise nach der Trocknung des Innenraums (60), insbesondere durch Vakuum-Trocknung, der Innenraum mit Edelgas wie Helium geflutet wird und nach Herstellen der stoffschlüssigen Verbindungen, die vorzugsweise mittels optischer und/oder Temperaturkontrolleinrichtungen überprüft werden, der Innenraum (60) vorzugsweise mit trockenem Stickstoff gespült und anschließend eine Dichtheitsprüfung des Außenrohrs (10) wie Helium-Dichtheitsprüfung durchgeführt wird.

7. Verfahren nach einem der vorhergehenden Ansprüche,
**dadurch gekennzeichnet,**
**dass** eine aus zumindest drei Rohrelementen (34, 36, 36', 38, 39), insbesondere eine aus fünf Rohrelementen bestehende Einheit als die Aufnahme (40) verwendet wird, wobei vorzugsweise die Rohrelemente (34, 36, 36', 38, 39) stirnseitig Flansche (40, 42, 46, 48, 42', 44', 74, 76) aufweisen, über die Rohrelemente untereinander und endseitig mit den ersten Verschlusselementen (78, 80) verbunden werden.

8. Verfahren nach Anspruch 1 oder Anspruch 7,
**dadurch gekennzeichnet,**
**dass** in eine aus einem oder drei inneren Rohrelementen (36, 36', 39) bestehende Einheit das Außenrohr (10) eingebracht, positioniert und fixiert wird,
**dass** ein äußeres außenseitig verschlossenes Rohrelement und ein äußeres außenseitig unverschlossenes Rohrelement (34, 38) mit der aus dem einen bzw. drei Rohrelementen bestehenden Einheit außerhalb der Flüssigkeit zusammengesetzt werden und dass in der Flüssigkeit das Außenrohr mit dem zumindest einen Brennstab (108) beladen wird und sodann das unverschlossene äußere Rohrelement geschlossen wird.

9. Verfahren nach einem der vorhergehenden Ansprüche,
**dadurch gekennzeichnet,**
**dass** die ersten Verschlusselemente (78, 80) von gegenüber dem Innenraum (60) abgedichteten Kolben (91, 100) von außenseitig auf den ersten Verschlusselementen angeordneten Zylindern (90, 98) durchsetzt werden, von denen die die zweiten Verschlusselemente aufnehmenden Halteelemente ausgehen.

10. Anordnung (28) zum gasdichten Umschließen zumindest eines sich in einer Flüssigkeit befindlichen Brennstabs (108) von einem Außenrohr (10, 11), dessen stirnseitige Öffnungen (110) von zweiten Verschlusselementen (12, 14) wie Kappen oder Stopfen verschlossen sind,
**dadurch gekennzeichnet,**
**dass** die Anordnung (28) umfasst
- eine rohrförmige Aufnahme (40) mit einer Umfangswandung und offenen Stirnseiten,
- erste Verschlusselemente (78, 80), die während eines stoffschlüssigen Verbindens des Außenrohrs (10, 11) mit den zweiten Verschlusselementen (12, 14) die Aufnahme abdichtend verschließen,
- eine Fixierelemente (66, 68) aufweisende Positioniereinrichtung (56, 58, 57, 59) zum Positionieren und Fixieren des Außenrohrs im Innenraum (69) der Aufnahme,
- zwei im Abstand der stimseitigen Öffnungen des Außenrohrs zueinander beabstandet angeordnete Heizeinrichtungen (70, 72) zum stoffschlüssigen Verbinden der zweiten Verschlusselemente mit dem Außenrohr und
- im Bereich der offenen Stirnseiten der Aufnahme entlang deren Längsachse verstellbare die zweiten Verschlusselemente lösbar aufnehmende Halteelemente (96, 106).

11. Anordnung nach Anspruch 10,
**dadurch gekennzeichnet,**
**dass** die Fixierelemente und/oder die Halteelemente jeweils von einer Kolbenstange (91, 57, 59) eines Zylinders (56, 58, 90) ausgehen und die vorzugsweise über Faltenbälge (62, 64, 92, 102) abgedichteten Kolbenstangen die Umfangswandung der Aufnahme bzw. die ersten Verschlusselemente durchsetzen und gegenüber dem Innenraum abgedichtet sind.

12. Anordnung nach Anspruch 10 oder 11,
**dadurch gekennzeichnet,**
**dass** die Fixierelemente und/oder die Halteelemente über elektromagnetische Mittel wie Stellmotor mit Spindel und/oder über zumindest einen Magnet und/oder eine Feder verstellbar sind, oder dass die Fixierelemente und/oder Halteelemente über ein Element aus der Gruppe Gewindespindel, Kurvenscheibe, Kurvenzylinder, Feder betätigbar sind.

13. Anordnung nach einem der Ansprüche 10 bis 12,
**dadurch gekennzeichnet,**
**dass** die ersten Verschlusselemente (78, 80) scheibenförmige Deckel sind, die mit von der Aufnahme (40) ausgehenden Flanschen (74, 76) verbunden sind, wobei insbesondere die ersten Verschlusselemente (78, 80) einen zum Innenraum (60) der Aufnahme (40) führenden Anschluss (86, 88) aufweisen.

14. Anordnung nach einem der Ansprüche 10 bis 13,
**dadurch gekennzeichnet,**
**dass** die Aufnahme (40) aus zumindest drei, vorzugsweise fünf Rohrelementen (34, 36, 39, 36', 38) besteht, wobei die äußeren Rohrelemente mit dem inneren Rohrelement bzw. den inneren Rohrelementen über Flansche (42, 44, 46, 48) verbunden sind.

15. Anordnung nach Anspruch 14,
**dadurch gekennzeichnet,**
**dass** die Aufnahme (40) zumindest zwei innere Rohrelemente (36, 36') aufweist, die jeweils eine Positioniereinrichtung (56, 57, 58, 59) aufweisen, wobei vorzugsweise zwischen den jeweils die Positioniereinrichtung (56, 57, 58, 59) aufweisenden inneren Rohrelementen (36, 36') ein weiteres Rohrelement (39) angeordnet ist, das mit ersteren vorzugsweise über Flansche verbunden ist.

## Claims

1. Method for gas-tight enclosure of at least one fuel rod (108) located in a liquid in an outer pipe (10) whose end openings are closed by second closing elements such as caps or plugs (12, 14) after insertion of the at least one fuel rod, **characterized by the process steps**
a) insertion of the outer pipe (10) into a pipe-like receptacle and positioning inside said receptacle (40),
b) closing of one of the first open ends of the receptacle using a first closing element (78),
c) insertion of the at least one fuel rod (108) into the outer pipe,
d) closing of the remaining open end of the receptacle using a further first closing element (80),
e) extraction of liquid present inside the receptacle at the level of the second closing elements aligned with the end openings of the outer pipe and at a distance therefrom,
f) drying of the interior (60) of the receptacle,
g) materially bonded connection of the second closing elements to the end openings of the outer pipe,
h) flooding of the receptacle and
i) removal from the receptacle of the outer pipe enclosing the at least one fuel rod,
where at least the process steps c) to i) are performed in a liquid or in the liquid in which the fuel rod is located.

2. Method according to Claim 1,
**wherein**
a respective second closing element is detachably connected to one of the first closing elements (78, 80) or to a fixing element extending therefrom prior to insertion into the receptacle, is connected preferably by means of an adhesive to the fixing element adjustable in the axial direction of the receptacle and wherein the connection is released during the materially bonded connection between the second closing element and the outer pipe (10), in particular destroyed by the effect of heat.

3. Method according to one of the preceding claims,
**wherein**
the second closing element is fixed by means of a mechanical holding element, where the second closing element in particular is connected indirectly or directly to a connecting element such as a bolt connected to the first closing element and destroyed by the effect of heat.

4. Method according to one of the preceding claims,
**wherein**
the outer pipe (10) is positioned and fixed inside the receptacle (10) by piston rods (57, 59), passing through the receptacle and sealed off from its interior, belonging to cylinders (56, 58) arranged outside the receptacle.

5. Method according to one of the preceding claims,
**wherein**
the second closing element is materially bonded to the end opening area of the outer pipe (10) by soldering or by heat emitted via induction heaters, where in particular the second closing elements are materially bonded to the outer pipe (10) under an inert gas atmosphere.

6. Method according to one of the preceding claims,
**wherein**
liquid is withdrawn from the receptacle (40) and/or the receptacle is vented via the first closing elements (78, 80), where the interior is flooded with inert gas such as helium preferably after drying of the interior (60), in particular by vacuum drying, and after making of the materially bonded connections, which are preferably checked by means of optical and/or temperature checking devices, the interior (60) is flushed preferably with dry nitrogen and then a tightness test of the outer pipe (10), such as a helium tightness test, is conducted.

7. Method according to one of the preceding claims,
**wherein**
a unit consisting of at least three pipe elements (34, 36, 36', 38, 39), in particular of five pipe elements, is used as the receptacle (40), where the pipe elements (34, 36, 36', 38, 39) preferably have at their ends flanges (40, 42, 46, 48, 42', 44', 74, 76) by which pipe elements are connected to one another and at the ends to the first closing elements (78, 80).

8. Method according to one of the preceding claims,
**wherein**
the outer pipe (10) is inserted, positioned and fixed inside a unit consisting of one or three pipe elements (36, 36', 39), wherein an outer pipe element closed on the outside and an outer pipe element (34, 36) unclosed on the outside are assembled outside the liquid with the unit consisting of one or three pipe elements, and wherein the outer pipe is loaded inside the liquid with the at least one fuel rod (108) and where the unclosed outer pipe element is then closed.

9. Method according to one of the preceding claims,
**wherein**
the first closing elements (78, 80) are passed through by pistons (91, 100) sealed from the interior (60) of cylinders (90. 98) arranged on the outside of the first closing elements, from which cylinders extend the holding elements receiving the second closing elements.

10. Arrangement (28) for gas-tight enclosure of at least one fuel rod (108) located in a liquid in an outer pipe (10, 11) whose end openings (110) are closed by second closing elements (12, 14) such as caps or plugs,
**wherein**
the arrangement (28) comprises
- a pipe-like receptacle (40) with a circumferential wall and open ends,
- first closing elements (78, 80) which close the receptacle in sealing manner during a materially bonded connection of the outer pipe (10, 11) to the second closing elements (12, 14),
- a positioning device (56, 58, 57, 59) having fixing elements (66, 68) for positioning and fixing of the outer pipe in the interior (69) of the receptacle,
- two heating devices (70, 72) arranged at a distance from one another and at a distance from the end openings for materially bonded connection of the second closing elements to the outer pipe, and
- holding elements (96, 106) adjustable in the area of the open ends of the receptacle along its longitudinal axis and detachably receiving the second closing elements.

11. Arrangement according to Claim 10,
**wherein**
the fixing elements and/or the holding elements each extend from a piston rod (91, 57, 59) of a cylinder (56, 58, 90) and the piston rods preferably sealed by concertina-type covers (62, 64, 92, 102) pass through the circumferential wall of the receptacle or the first closing elements and are sealed from the interior.

12. Arrangement according to Claim 10 or 11,
**wherein**
the fixing elements and/or the holding elements are adjustable using electromagnetic means such as an actuating motor with spindle and/or using at least one magnet and/or a spring, or where the fixing elements and/or holding elements can be actuated using an element from the group of threaded spindle, cam disc, cam cylinder, spring.

13. Arrangement according to one of Claims 10 to 12,
**wherein**
the first closing elements (78, 80) are disc-like covers connected to flanges (74, 76) extending from the receptacle (40), where in particular the first closing elements (78, 80) have a connection (86, 88) leading to the interior (60) of the receptacle (40).

14. Arrangement according to one of Claims 10 to 13,
**wherein**
the receptacle (40) consists of at least three, preferably five pipe elements (34, 36, 39, 36', 38), where the outer pipe elements are connected to the inner pipe element(s) via flanges (42, 44, 46, 48).

15. Arrangement according to Claim 14,
**wherein**
the receptacle has at least two inner pipe elements (36, 36') each having a positioning device (56, 57, 58, 59), where a further pipe element (39) connected to the first ones preferably by flanges is arranged between the inner pipe elements (36, 36') each having the positioning device (56, 57, 58, 59).

## Revendications

1. Procédé pour confiner de manière étanche au gaz au moins une barre de combustible (108) placée dans un liquide d'un tube extérieur (10) dont les ouvertures frontales sont obturées par des seconds éléments d'obturation tels que des capuchons ou des bouchons (12, 14) après l'introduction de l'au moins une barre de combustible,
**caractérisé par** les étapes de process
a) Introduction du tube extérieur (10) dans un logement tubulaire et positionnement dans le logement (40),
b) obturation d'une des premières faces frontales ouvertes du logement avec un premier élément d'obturation (78),
c) introduction de l'au moins une barre de combustible (108) dans le tube extérieur,
d) obturation de la face frontale ouverte restante du logement avec un autre premier élément d'obturation (80),
e) aspiration du liquide présent dans le logement au niveau des seconds éléments d'obturation orientés sur les ouvertures frontales du tube extérieur et distants de celles-ci,
f) séchage de l'intérieur (60) du logement,
g) assemblage par liaison de matière des seconds éléments d'obturation avec les ouvertures frontales du tube extérieur,
h) remplissage du logement et
i) retrait hors du logement du tube extérieur entourant l'au moins une barre de combustible,
sachant qu'au moins les étapes c) à i) du procédé sont effectuées dans un liquide ou dans le liquide dans lequel se trouve la barre de combustible.

2. Procédé selon la revendication 1,
**caractérisé en ce**
**qu'**avant l'introduction dans le logement, un second élément d'obturation respectif est relié de manière détachable avec l'un des premiers éléments d'obturation (78, 80) ou avec un élément de fixation partant de celui-ci, de préférence au moyen d'une colle avec l'élément de fixation mobile dans le sens axial du logement, et que la jonction pendant l'assemblage par liaison de matière entre le second élément d'obturation et le tube extérieur (10) est supprimée, en particulier détruite sous l'effet de la chaleur.

3. Procédé selon l'une des revendications précédentes,
**caractérisé en ce**
**que** le second élément d'obturation est fixé par un élément de maintien mécanique, sachant qu'en particulier le second élément d'obturation est relié indirectement ou directement à un élément de jonction, tel qu'une vis, relié au premier élément d'obturation et qui est détruit sous l'effet de la chaleur.

4. Procédé selon l'une des revendications précédentes,
**caractérisé en ce**
**que** le tube extérieur (10) est positionné et fixé dans le logement par l'intermédiaire des tiges de piston (57, 59) entrant dans le logement (40) et étanchées par rapport à son intérieur (60), appartenant à des vérins (56, 58) placés à l'extérieur du logement.

5. Procédé selon l'une des revendications précédentes,
**caractérisé en ce**
**que** le second élément d'obturation est assemblé par liaison de matière avec la zone d'ouverture frontale du tube extérieur (10) par brasage ou par la chaleur dégagée par des chauffages à induction, sachant qu'en particulier les seconds éléments d'obturation sont assemblés par liaison de matière avec le tube extérieur (10) sous une atmosphère de gaz rares.

6. Procédé selon l'une des revendications précédentes,
**caractérisé en ce**
**qu'**à travers les premiers éléments d'obturation (78, 80) du liquide est aspiré hors du logement (40) et/ou le logement est purgé d'air, sachant que de préférence après le séchage de l'intérieur (60), en particulier par séchage à vide, l'intérieur est rempli d'un gaz rare, tel que l'hélium, et qu'après la réalisation des assemblages par liaison de matière, qui sont de préférence contrôlés par des dispositifs de contrôle optiques et/ou thermiques, l'intérieur (60) est rincé de préférence avec de l'azote sec, puis est effectué un contrôle d'étanchéité, tel qu'un contrôle d'étanchéité à l'hélium, du tube extérieur (10).

7. Procédé selon l'une des revendications précédentes,
**caractérisé en ce**
**qu'**est utilisée en tant que logement (40) une unité constituée d'au moins trois éléments tubulaires (34, 36, 36', 38, 39), en particulier de cinq éléments tubulaires, sachant que de préférence les éléments tubulaires (34, 36, 36', 38, 39) présentent sur leur face des brides (40, 42, 46, 48, 42', 44', 74, 76) au moyen desquelles les éléments tubulaires sont reliés entre eux, et à leurs extrémités avec les premiers éléments d'obturation (78, 80).

8. Procédé selon la revendication 1 ou 7,
**caractérisé en ce**
**que** le tube extérieur (10) est introduit, positionné et fixé dans une unité constituée d'un ou de trois élément(s) tubulaire(s) interne(s) (36, 36', 39), qu'un élément tubulaire externe fermé de l'extérieur et un élément tubulaire (34, 38) externe non fermé de l'extérieur sont assemblés hors du liquide avec l'unité constituée d'un ou de trois élément(s) tubulaire(s), que le tube extérieur avec l'au moins une barre de combustible (108) est chargé dans le liquide et qu'ensuite l'élément tubulaire externe non fermé est fermé.

9. Procédé selon l'une des revendications précédentes,
**caractérisé en ce**
**que** les premiers éléments d'obturation (78, 80) sont traversés par des pistons (91, 100) étanchés par rapport à l'intérieur (60), appartenant à des vérins (90, 98) placés à l'extérieur sur les premiers éléments d'obturation et desquels partent les éléments de maintien recevant les seconds éléments d'obturation.

10. Système (28) destiné à confiner de manière étanche au gaz au moins une barre de combustible (108) placée dans un liquide d'un tube extérieur (10, 11) dont les ouvertures frontales (110) sont obturées par des seconds éléments d'obturation (12, 14) tels que des capuchons ou des bouchons,
**caractérisé en ce**
**que** le système (28) comprend
- un logement tubulaire (40) avec une paroi circonférentielle et des faces frontales ouvertes,
- des premiers éléments d'obturation (78, 80), qui pendant un assemblage par liaison de matière du tube extérieur (10, 11) avec les seconds éléments d'obturation (12, 14) obturent le logement de manière étanche,
- un dispositif de positionnement (56, 58, 57, 59) présentant un élément de fixation (66, 68) pour positionner et fixer le tube extérieur à l'intérieur (69) du logement,
- deux dispositifs de chauffage (70, 72) disposés distants l'un de l'autre ainsi que des ouvertures frontales du tube extérieur, destinés à assembler par liaison de matière les seconds éléments d'obturation avec le tube extérieur, et
- dans la zone des faces frontales ouvertes du logement, des élément de maintien (96, 106) mobiles le long de l'axe longitudinal du logement et qui maintiennent de manière détachable les seconds éléments d'obturation.

11. Système selon la revendication 10,
**caractérisé en ce**
**que** les éléments de fixation et/ou les éléments de maintien partent respectivement d'une tige de piston (91, 57, 59) d'un vérin (56, 58, 90), et que les tiges de piston de préférence étanchées par des soufflets (62, 64, 92, 102) traversent respectivement la paroi circonférentielle du logement et les premiers éléments d'obturation et sont étanchées par rapport à l'intérieur.

12. Système selon la revendication 10 ou 11,
**caractérisé en ce**
**que** les éléments de fixation et/ou les éléments de maintien sont réglables grâce à des moyens électromagnétiques tels qu'un servomoteur avec broche et/ou grâce à au moins un aimant et/ou un ressort, ou que les éléments de fixation et/ou les éléments de maintien peuvent être actionnés par un élément appartenant au groupe des broches filetées, disques à came, cylindres à came, ressorts.

13. Système selon l'une des revendications 10 à 12,
**caractérisé en ce**
**que** les premiers éléments d'obturation (78, 80) sont des couvercles en forme de disque, qui sont reliés aux brides (74, 76) partant du logement (40), sachant qu'en particulier les premiers éléments d'obturation (78, 80) présentent un raccord (86, 88) menant vers l'intérieur (60) du logement (40).

14. Système selon l'une des revendications 10 à 13,
**caractérisé en ce**
**que** le logement (40) est constitué d'au moins trois, de préférence cinq éléments tubulaires (34, 36, 39, 36', 38), sachant que les éléments tubulaires externes sont reliés par des brides (42, 44, 46, 48) à l'élément tubulaire interne ou aux éléments tubulaires internes.

15. Système selon la revendication 14,
**caractérisé en ce**
**que** le logement (40) présente au moins deux éléments tubulaires internes (36, 36'), qui présentent chacun un dispositif de positionnement (56, 57, 58, 59), sachant que de préférence entre chacun des éléments tubulaires internes (36, 36') présentant le dispositif de positionnement (56, 57, 58, 59) est placé un autre élément tubulaire (39) qui est de préférence relié aux premiers par des brides.
